# EUROPEAN PATENT SPECIFICATION

(11) **EP 3 944 925 B1**
(45) Date of publication and mention of the grant of the patent: **07.12.2022**
(21) Application number: 21182055.0
(22) Date of filing: 28.06.2021
(51) Int. Cl.: B24B 3/46, B24B 49/12, G05B 19/4065, B26D 7/12, B26D 5/00, B26D 1/16, G05B 19/401, G05B 19/418

(54) **SYSTEM FOR CONTROLLING THE QUALITY OF PRODUCTS IN OUTPUT FROM A CUTTING MACHINE**
SYSTEM ZUR STEUERUNG DER QUALITÄT VON AUSGEGEBENEN PRODUKTEN VON EINER SCHNEIDEMASCHINE
SYSTÈME DE CONTRÔLE DE LA QUALITÉ DE PRODUITS DANS UNE SORTIE DE MACHINE DE COUPE

(30) Priority: 29.07.2020 IT 202000018466
(43) Date of publication of application: 02.02.2022
(73) Proprietor: Paper Converting Machine Company S.p.A, 55051 Barga (LU) (IT)
(72) Inventor: FRANCESCONI, Gerardo, 55100 Lucca (IT); PELLEGRINI, Fabio, 55100 Lucca (MR)
(74) Representative: Mazzitelli, Maria

(56) References cited:
- EP-A1- 3 311 965
- WO-A1-2020/003329
- WO-A1-2021/064145
- US-A1- 2016 236 369

## Description

The present invention relates to the field inherent in the production of rolls of sheet materials. More particularly, the present invention relates to a system for controlling the quality of products in output from cutting machines for cutting logs or sticks of paper, tissue paper and the like.

### Background of the invention

Conventionally, the manufacture of rolls of sheet materials, such as toilet paper, tissue paper, kitchen paper and similar products, requires a plurality of process steps, comprising unwinding of the sheet material from a large diameter roll, the rewinding, possibly on a core, to form smaller diameter logs or sticks, the cutting of the logs into rolls of the desired length, based on their end use, and the packaging of the rolls.

The cutting of the logs to form shorter length rolls is carried out with special cutting machines, which have one or more metal or ceramic blades, of the disc type, which are made to rotate in an orbit around an axis in a cutting plane transverse to the direction of feeding of the log, or of the belt type, which are cyclically lowered onto the log to be cut.

The logs are made to move forwards, normally in several parallel channels, towards the cutting blade, pushed by special pushers of a drive chain driven on idler wheels.

Another type of cutting machine involves a series of fixed flat blades against which the logs are dragged in a direction perpendicular to their axes, so as to be "sliced".

A problem that reduces, even drastically, the productivity of cutting machines is the maintaining of roll quality due to the loss of the edge of the cutting machine.

Since the cutting blade must have a high speed of rotation, during cutting a high level of friction is generated between the surface of the blade and that of the log to be cut, which in the long term causes a loss of sharpness with jagged bevelled edges.

Consequently, once a limit deformation has been reached, it is necessary to sharpen the blade in order not to have rolls exiting the cutting station with such a low quality as to be unusable. An excessively jagged blade, moreover, could be further deformed and damaged to the point of breaking.

In lines for the production and packaging of tissue paper there are several stations whose components need to be replaced. Typical actions of replacement of worn components are linked specifically to the maintenance of cutting machines, where the cutting blades have to be periodically replaced due to loss of edge caused by contact both with the logs to be cut and with the sharpening wheels. The sharpening wheels themselves must be replaced periodically.

These replacements are costly operations, they require time and production to be halted, with consequent impact on productivity.

During production, the cutting machines are generally set at a minimum operating speed in order to avoid continuous interventions by the operators, whose objective is to obtain an adequate level of productivity without the risk of affecting the quality of the product. Each cutting blade, of whatever model, has in fact an intrinsic limit of useful life which normally determines a limit in the production rate, either because the product cannot be cut at any speed or because there is no certainty of the duration of the blade.

Conventionally, cutting machines are equipped with systems designed to check the state of wear of the blade, monitoring deformation thereof and sharpening it when necessary. However, most of the systems currently used are inefficient. It is often the case, in fact, that the sharpening wheel does not perform its work correctly. In the industry, the use of glues and various substances during production can soil or generally influence the state of the wheel, resulting in a deterioration in the quality of the sharpening.

In addition, in many embodiments, the control takes place in an open chain, i.e. the grinding wheel is made to move forwards at intervals of time or every number of cuts pre-set, without taking into particular account the actual consumption of the blade.

EP 3311965 A1 discloses a cutting machine for the cutting of logs of sheet material comprising one or more cutting blades placed on a plane perpendicular to the axis of the logs, in order to perform transverse cuts over the same and produce rolls of smaller length with respect to the logs, wherein the cutting blades are associated with an ultrasonic device apt to generate a vibrating force on them. The object is that of providing a cutting machine which aims to avoid overheating and reduce deformation of the cutting blade. The machine of EP 3311965 A1 therefore provides ultrasonic devices cooperating directly with the cutting blades in order to improve the performances thereof. It must be said that, even if reduced, wear and loss of sharpness can still occur, which require maintenance actions both on the blades and the sharpening wheels, with the same critical points as above.

WO2021/064145 A1 is prior art falling under Art. 54(3) EPC.

From the foregoing, it is clear that the production rate of a cutting machine is influenced by the state of the cutting blade, which is subjected to substantially periodic sharpening of constant duration and no solution effectively takes into consideration the quality of the product in output.

### Summary of the Invention

The object of the present invention is to provide a system for controlling the quality of products in output from a cutting machine that eliminates, or at least reduces, the disadvantages of **the cutting machines according to** the prior art.

In particular, an object of the present invention is to provide a system that allows the performing of an automated process of sharpening of the cutting blade based on a detection of a set of values of the quality of the roll in output from the cutting machine. Another object of the present invention is to provide a system for controlling the quality of the products in output which enables optimal sharpening of the cutting blade while avoiding unwanted edge losses and deformations in order to increase the working life of the tool, with consequent higher production rate and productivity levels.

Another object of the present invention is to provide a control system that allows maintenance operations to be performed on the cutting blade and sharpening wheels based on a detection of the quality of a roll in output from the cutting machine.

Yet another object of the present invention is to provide a method of controlling the sharpening of the cutting blade that can be applied to a cutting machine of any one of the known types in order to achieve the results foreseen.

A further object of the present invention is to provide a cutting machine in which the cutting blade does not require frequent sharpening operations.

These and other objects are achieved by the control system for controlling the cutting quality in a cutting machine in accordance with the invention having the features listed in the appended independent claim 1.

Advantageous embodiments of the invention are disclosed by the dependent claims.

Substantially, the present invention relates to a system for controlling the quality of products in output from a cutting machine, in particular a cutting machine used for cutting logs of sheet material, in particular paper, having at least one cutting disc and a sharpening wheel, said control system comprising a PLC controller designed to control the cutting and sharpening process and an inspection system comprising a vision system consisting of one or more cameras designed to scan at a given time instant a set of quality values consisting of one or more photographic scans of a roll in output from the cutting machine, in which a processing unit receives said set of quality values of the roll in output and compares them with reference quality values consisting of photographs or renderings of rolls with ideal cutting quality to verify whether the roll has sufficient quality levels and sends to the PLC controller a command aimed at carrying out an action consisting of increasing or decreasing one of the following parameters
- sharpening time;
- sharpening frequency;
- differential speed between said wheel and said disc;
based on the result of the comparison between Qₒᵤₜ and Qₛₑₜₚₒᵢₙₜ and of the action performed at the previous time instant.

Further features of the invention will be made clearer by the following detailed description, referred to a purely illustrative, and therefore non-limiting, example embodiment thereof illustrated in the accompanying drawings, wherein:
Figure 1 is a schematic perspective view of a cutting machine with a cutting disc mounted on an orbiting arm according to the prior art;
Figure 2 is a block diagram illustration showing the components of the system for controlling the quality of products in output from a cutting machine according to the invention;
Figure 3 is a block diagram showing the flow diagram of operations performed when the control system launches a sharpening process;
Figure 4 is an image showing the scan by an inspection system of a roll with ideal cutting quality and geometric parameters;
Figures 5a and 5b show scans performed on the outer and inner edges of the roll in Fig. 4 for geometric analyses;
Figure 5c is a representation of the roll of Fig. 4 to which a filter is applied for cut cleanliness analysis;
Figure 6 shows the scan by an inspection system of a roll with insufficient cut quality;
Figures 7a and 7b show images of the roll of Fig. 6 subjected to geometric and cut cleanliness analysis, respectively;
Figure 8 shows the scan by an inspection system of a roll with an inadequate inner hole;
Figure 9 is an image of detection of geometric parameters on the scan of Fig. 8; and
Figure 10 shows a schematic side view of a roll cut in a compliant manner and of a non-complying roll which has undergone an effect of distortion or bias.

### Detailed description of the invention

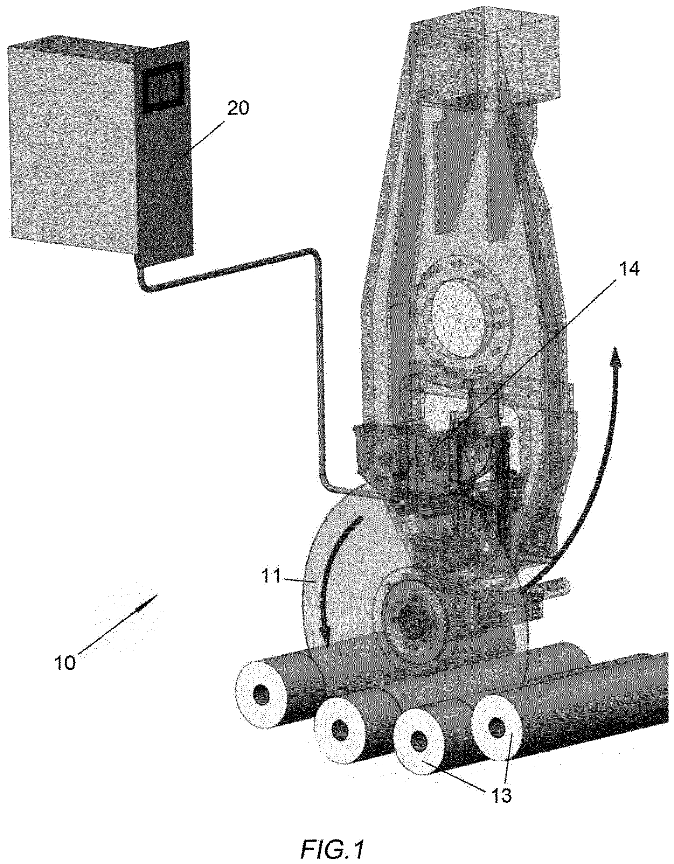

The method of controlling the process of sharpening of the cutting blade according to the present invention can be applied to a standard cutting machine 10 such as, for example, that shown in Fig. 1.

Such a machine 10 has substantially a rotating disc blade 11 mounted on an orbiting arm in such a way that the blade completes an orbit in a cutting plane perpendicular to the axis of the logs 13 to be cut. This drawing also shows a sharpening assembly comprising, in the illustrative example, a pair of sharpening wheels 14, although a single sharpening wheel 14 may be provided. The functioning of the machine 10 is controlled by a PLC controller 20.

According to the present invention, an inspection system S is associated with the cutting machine 10 which is suitable for scanning a set of Qₒᵤₜ values of the state and quality of a product in output from the cutting machine 10, generally a roll 15, to compare it with a Qₛₑₜₚₒᵢₙₜ reference value that represents the standard value of the quality of the roll. A value or a set of values scanned that deviate from the reference value Qₛₑₜₚₒᵢₙₜ indicates that the roll 15 analysed has more or less marked defects and is indicative of the fact that such defects will be repeated in the subsequent rolls in output if the current machine settings are continued or if no maintenance operations are performed.

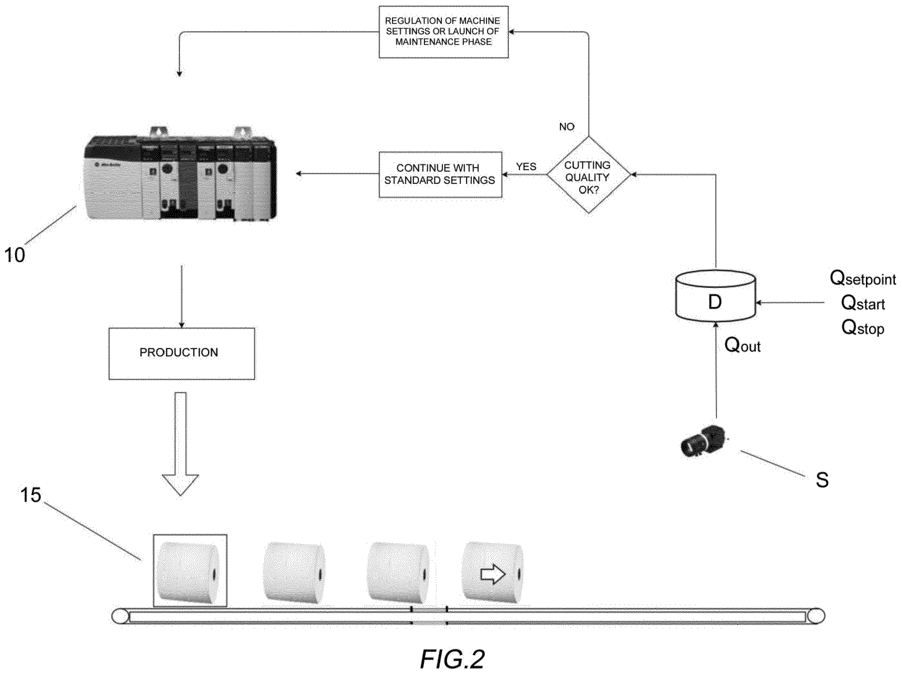

Fig. 2 is a schematic block representation of the components of the quality control system. The values scanned by the inspection system S are sent to a processing unit D which is able to carry out a quality comparison with the reference values.

One of the causes of bad cutting quality is represented, as mentioned several times, by the poor condition of the cutting blade, as well as by inefficient sharpening operations. The system according to the present invention represents a solution to this disadvantage by providing a dynamic method of control of the sharpening process which self-regulates according to the values of the condition of the roll in output from the cutting machine scanned at successive time instants and continuously varying the basic parameters of the sharpening process which are represented by:
- sharpening time Δtₛₕₐᵣₚ, i.e. the duration of a single sharpening phase;
- sharpening frequency fₛₕₐᵣₚ, i.e. the frequency with which sharpening takes place;
- differential speed Δv, i.e. the difference between the speed of rotation of a sharpening wheel 14 and that of the cutting blade or disc 11.

In practice, at a time instant t(k), the set of values Qₒᵤₜ indicating the state and quality of a roll in output is scanned. The Qₒᵤₜ values are sent to the processing unit D which performs a comparison with the reference value Qₛₑₜₚₒᵢₙₜ and sends to the machine control the command for the action to be carried out, in such a way as to automate the sharpening process, reducing operator intervention to a minimum and always guaranteeing the quality of the cut.

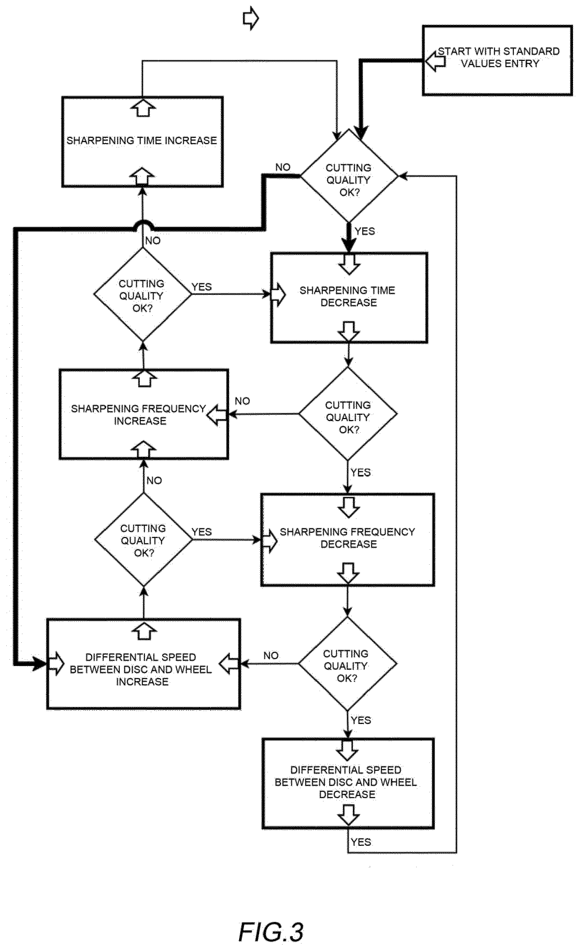

When necessary, the control system according to the invention launches a dynamic cycle of regulation of the sharpening parameters, in the sense that the action to be carried out at the instant t(k) is processed as a function of the one to be performed at the previous time instant t(k-1), according to the algorithm shown in the flow diagram of Fig. 3 and as illustrated below.

Within a parameter setting cycle, at each time instant t(k) the set of values scanned Qₒᵤₜ is compared with the reference value Qₛₑₜₚₒᵢₙₜ to verify the cutting quality. If the comparison gives a positive result, i.e. if the cutting quality is observed, the processing unit D sends a command to the controller PLC 20 aimed at decreasing one of the three fundamental parameters of the process (sharpening time, sharpening frequency, differential speed). If the result is negative, on the contrary, the command sent to the PLC is aimed at decreasing one of the three parameters.

The choice of which parameter to change at time t(k) depends on the action taken in the previous step t(k-1). If, for example, the comparison on the quality of the cut gives a positive result and at the previous instant t(k-1) the sharpening time Δtₛₕₐᵣₚ was decreased, processing unit D sends a command to decrease the sharpening frequency fₛₕₐᵣₚ. If at the next instant t(k+1) the query still gives a positive result, the PLC controller will also decrease the differential speed Δv. If also at the following instant t(k+2) the quality of the cut is still sufficient, the control system will further decrease the sharpening time Δtₛₕₐᵣₚ, and the cycle is thus repeated in the subsequent phases until the instant in which the comparison of the quality of the cut has a negative result.

The scan of the set of quality values Qₒᵤₜ of the rolls in output from the cutting machine can take place in different ways. In a preferred embodiment of the invention, the inspection system S consists of a vision system capable of scanning one or more images or making captures of a roll, and the reference value Qₛₑₜₚₒᵢₙₜ consists of a series of views or renderings of a roll with standard quality levels.

After having scanned the images via the inspection system S, a processing unit D analyses the geometries of the roll, seeking outsize values (in particular external and internal diameter of the roll, but in general any geometric measurement desired). Above all, the circularity of the roll is assessed, given that the cutting operation tends to crush the hole from above at the blade entrance. In addition, the processing system can evaluate a non-clean or non-straight cut: by applying a filter, the shadow zones corresponding to non-adjacent cuts can be highlighted and measured.

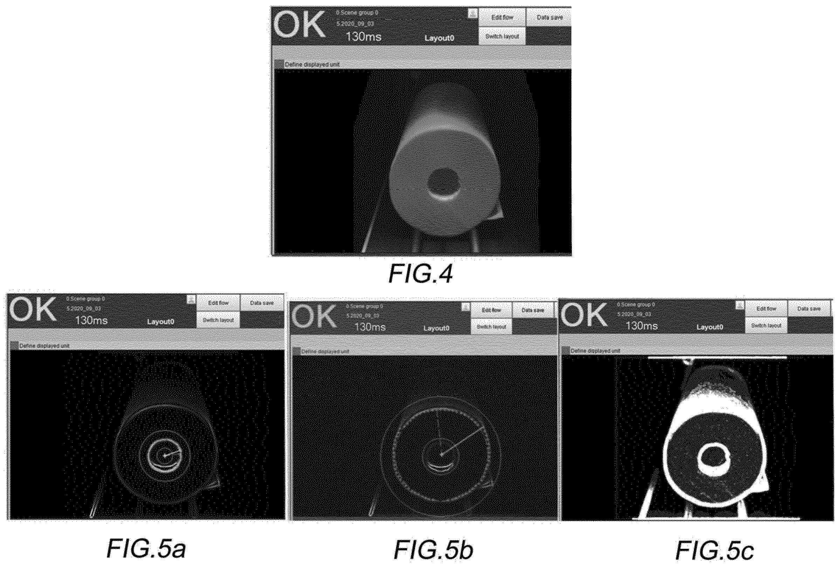

Referring to the accompanying drawings, Fig. 4 shows the scan by the inspection system of a roll with ideal cutting quality and geometric parameters. The scanned image can be used to detect the "standard" geometric parameters, preferably by means of a scanning system, capable for example of scanning inner and outer edges, as shown in Figures 5a and 5b. The scans carried out will be used for subsequent geometric analyses, such as radius detection and centring. Such a scan is evaluated by the processing unit as compliant, with a display on the screen (OK). In addition, the parameters used for the evaluation can also be displayed.

The scans and processing operations carried out on a roll with ideal cutting quality and geometric parameters are stored in the processing unit and will be used as a reference measurement for the evaluation of subsequent scans.

Figure 5c is an image corresponding to the scan of Fig. 4a following the application of a filter which enables areas to be detected where the cut is not precise, indicated by an excessive presence of white pixels. Fig. 5c shows a circular corona substantially devoid of white pixels.

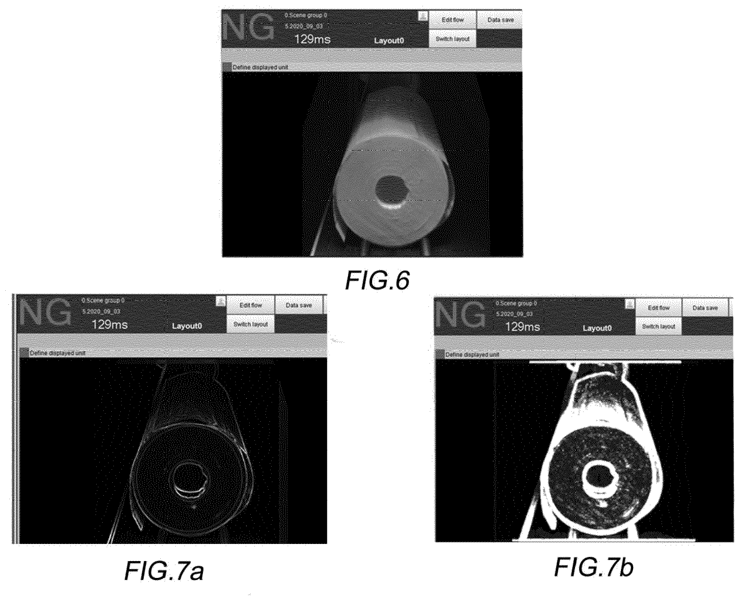

Fig. 6 shows a detected image of a roll in which the cut is not adequately smoothed. Some defects can be seen such as, for example, discontinuous lines on the cutting surface.

Fig. 7a shows the image of Fig. 6 subjected to scanning to detect geometrical parameters and Fig. 7b shows the image of Fig. 6 after applying the filter for the analysis of the defects. It can be seen how the presence of "white pixels" is much greater than in Fig. 5c, demonstrating the fact that the cutting surface is not adequately smoothed. In this case, the processing unit reports the scan as not good (NG).

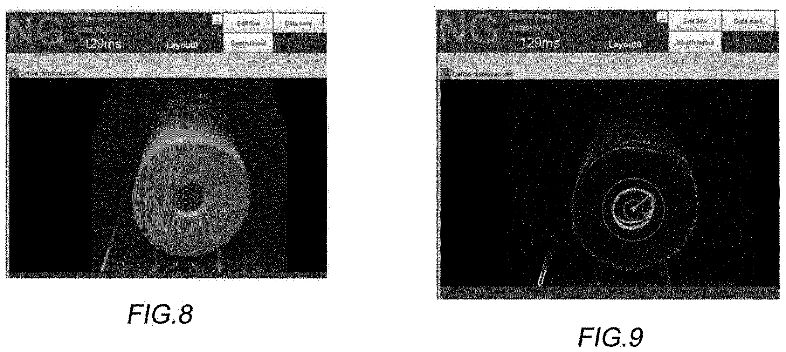

Figure 8 shows the scan of a roll that has an inner hole that is not perfectly circular, while Figure 9 shows the detection of the geometric parameters on this roll by scanning. The processing unit carries out the comparison with the scans captured and stored for rolls with ideal geometry. In this case, having evaluated that the dimensions of the hole do not come within the set tolerances, it evaluates and reports the cut as not good (NG).

In the preferred embodiment, the vision system allows up to eight cameras to be handled simultaneously, arranged in such a way as to give a complete representation of the roll in output from different perspectives. Such an inspection system S allows the evaluation, besides the cut quality, of also other fundamental values of the condition of the roll in output, among which the presence of dirt, core defect or crushing, length problems, etc.

On the basis of various studies and tests carried out on rolls with a maximum diameter of 200 mm at a production rate of 270 rolls/minute, the inspection system S achieves the best results with a system having four to eight cameras arranged at a distance of between 100 and 1000 mm from the centre of the roll.

For each camera a lighting system is provided composed of two LED bars of approximately 250 mm, one arranged in a vertical direction, the other in a horizontal direction. The lights are automatically switched on sequentially for each camera in order to detect defects in two directions, i.e. from above and from the side. In this way it is possible to detect defects present whatever the orientation of the roll in output.

Using a calibration pattern, the inspection system also compensates the angle of the camera, avoiding distortions of images.

Various analyses can be carried out on the scanned images. For example, it is possible to go to measure the circumference of the roll in output and compare it with the standard values.

A possible alternative or integration to an inspection system S described above comes from an automated mechanical system comprising a gripper or load cell system capable of checking the compactness of the roll in output. The roll in output is taken by the gripper and compressed by a few mm (generally 2 to 5 mm). Once the force required to compress it has been verified, the measure of its compactness (firmness) is obtained and indirectly its density.

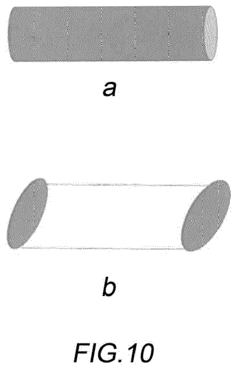

In addition, the system can be integrated with a robotised system (or robotic arm) to check on the presence of any bias effects of the roll. "Bias" substantially refers to the fact that the roll has not undergone a straight and precise cut, but instead has a "salami" configuration as shown in Figure 10, where a) the structure of a standard roll and b) the structure of a roll with bias are schematically illustrated. Substantially, the roll bias occurs when the cutting surfaces are not perpendicular but inclined with respect to its longitudinal axis. When the system detects a bias effect, the quality of the cut is clearly evaluated as not good (NG quality).

In any embodiment, from what has just been said, a positive evaluation of the cut quality (OK quality) in successive instants gives rise to a phase of decrease in series of the parameters which is interrupted when the interrogation has a negative result (NG quality, right branch of the flow diagram of Fig. 3). In the example a cycle is described which involves the decrease of the parameters in sequence: sharpening time, sharpening frequency, differential speed. Clearly the sequence can be set according to preferences and experience, for example a decrease in sharpening time can be followed by a decrease in differential speed.

Contrary to what is described in the example in the case of a positive evaluation of the cutting quality, a comparison between the set of scanned values Qₒᵤₜ and the reference value Qₛₑₜₚₒᵢₙₜ which has a negative result gives rise to a phase of increment of the parameters (left-hand branch of the flow diagram), generally with a sequence which is inverted with respect to the phase of decreasing of the parameters. In the example case shown in Fig. 3, the sequence of decrease of the parameters is: differential speed, sharpening frequency, sharpening time. That is to say that, in the case of negative evaluation of the cutting quality, the system will continue to cyclically increment the three parameters in this order until an adequate quality is obtained.

When at the instant t(k) the comparison on the quality of the cut gives a different result from that carried out at the previous instant t(k-1), the processing unit intervenes by evaluating which was the last operation carried out. For example, with reference to the flow diagram of Fig. 3, if, following an increment at instant t(k-1) of the sharpening time Δₜₛₕₐᵣₚ (block top left), the quality of the cut at instant t(k) is sufficient, the processing unit D sends a command aimed at decreasing the same sharpening time Δtₛₕₐᵣₚ. If at the next instant t(k+1) the quality of the cut were again to be insufficient, the PLC controller intervenes, in this case incrementing the sharpening frequency fₛₕₐᵣₚ, and so on according to the diagram shown.

The system for controlling cut quality described above can be implemented in various ways. For example, processing unit D can decide whether to carry out operations on the parameters of the sharpening process or whether to continue with the parameters already set, without any intervention (Fig. 2).

In fact, the processing unit D may decide to launch a phase of regulation of the parameters only when the set of quality values Qₒᵤₜ scanned at an instant t(k) is lower than a start reference quality threshold Qₛₜₐᵣₜ. From this instant, the control system carries out a series of operations according to the methodology described above until the instant in which the set of quality values Qₒᵤₜ meets a stop reference quality value Qₛₜₒₚ. In the case wherein it is necessary to launch a phase of regulation of the parameters, this generally starts with the increment of one of the parameters. For example, the phase can start with the increment of the differential speed Δv and continue according to the diagram in Fig. 3, but clearly the phases can be modified according to preferences.

Another implementation of the control system consists in the qualitative inspection of the images or values scanned Qₒᵤₜ in order to detect the presence of dirt, wrinkles or other surface defects on the rolls in output from the cutting machine and deciding to perform maintenance operations on the machine, for example stopping it to allow cleaning of the cutting disc, regulation of the working pressures or other manual operations.

A further aspect of the present invention relates to the possibility of the processing unit to store the data coming from scans of quality values of the rolls and from the operations performed. Such data can be used by the processing unit D to implement (e.g. by means of artificial intelligence and automatic learning techniques) the process of setting and choosing sharpening parameters in order to minimise consumption of the cutting disc and maximise the efficiency of the process.

Naturally the invention is not limited to the particular embodiments previously described and illustrated in the accompanying drawings, but numerous detailed changes may be made thereto within the reach of the person skilled in the art, without thereby departing from the scope of the invention itself, as defined by the appended claims.

## Claims

1. System for controlling the quality of products in output from a cutting machine, in particular a cutting machine used for cutting logs of sheet material, in particular paper, having at least one cutting disc (11) and one sharpening wheel (14), said control system comprising a PLC controller (20) designed to control the cutting and sharpening process and an inspection system (S) comprising a vision system consisting of one or more cameras apt to scan at a given time instant (t(k)) a set of quality values (Qₒᵤₜ) consisting of one or more photographic scans of a roll (15) in output from the cutting machine,
**characterised in that**
said vision system is made up of 4 to 8 cameras arranged at a distance of between 100 and 1000 mm from the centre of the roll (15), and
a processing unit (D) receives said set of quality values (Qₒᵤₜ) of the roll (15) in output and compares them with reference quality values (Qₛₑₜₚₒᵢₙₜ) consisting of photos or renderings of rolls with ideal cutting quality to check whether the roll (15) has sufficient quality levels and sends a command to the PLC controller (20) aimed at performing an action consisting of increasing or decreasing one of the following parameters:
- sharpening time (Δtₛₕₐᵣₚ)
- sharpening frequency (fₛₕₐᵣₚ)
- differential speed (Δv) between said sharpening wheel (14) and said disc (11) based on the result of the comparison between said set of quality values in output (Qₒᵤₜ) and the reference quality values (Qₛₑₜₚₒᵢₙₜ) and of the action performed at the previous time instant (t(k-1)).

2. System for controlling the quality of products in output from a cutting machine according to claim 1, comprising moreover an automated mechanical system having a gripper or a load cell system able to apply a compression from 2 to 5 mm to ascertain the compactness and the density of the roll in output (15).

3. System for controlling the quality of products in output from a cutting machine according to claim 1 or 2, comprising moreover a robotic arm able to check on any defects of distortion or bias of the roll in output (15), that is whether the cutting surfaces are perpendicular or inclined with respect to the longitudinal axis of the roll.

4. System for controlling the quality of products in output from a cutting machine according to claim 1, wherein the processing unit (D) comprises a system of detection and of analysis of the geometries of the roll (15), in particular a scanning system able to detect at least the geometries of the inner edge and of the outer edge of the roll.

5. System for controlling the quality of products in output from a cutting machine according to one of the preceding claims, comprising moreover a system for applying a filter to the photographic scans (Qₒᵤₜ) able to highlight the shade areas corresponding to a non-adjacent cut on the roll in output (15).

6. System for controlling the quality of products in output from a cutting machine according to one of the preceding claims, wherein said processing unit (D) launches a phase of regulation of the parameters of the sharpening process comprising a series of actions consisting of increasing or decreasing one of the following parameters (sharpening time (Δtₛₕₐᵣₚ), sharpening frequency (fₛₕₐᵣₚ), differential speed (Δv)) only when the set of quality values (Qₒᵤₜ) scanned is below a start reference quality threshold (Qₛₜₐᵣₜ), the parameter regulation phase ending when the set of quality values (Qₒᵤₜ) meets a stop reference quality value (Qₛₜₒₚ).

7. System for controlling the quality of products in output from a cutting machine according to claim 6, wherein said parameter regulation phase starts with an increment in the differential speed (Δv) between sharpening wheel (14) and disc (11).

8. System for controlling the quality of products in output from a cutting machine according to any one of the preceding claims, wherein, if in consecutive instants the comparison between said set of quality values (Qₒᵤₜ) and said reference quality value (Qₛₑₜₚₒᵢₙₜ) has a positive result, said parameters are decreased sequentially and cyclically, in the following order: sharpening time (Δtₛₕₐᵣₚ) - sharpening frequency (fₛₕₐᵣₚ) - differential speed (Δv).

9. System for controlling the quality of products in output from a cutting machine according to any one of the preceding claims, wherein, if in successive instants the comparison between said set of quality values (Qₒᵤₜ) and said reference quality value (Qₛₑₜₚₒᵢₙₜ) has a negative result, said parameters are increased sequentially and cyclically, in the following order: differential speed (Δv) - sharpening frequency (fₛₕₐᵣₚ) - sharpening time (Δtₛₕₐᵣₚ).

10. System for controlling the quality of products in output from a cutting machine according to any one of the preceding claims, wherein each of said one or more cameras is associated with a lighting system consisting of a vertical LED lighting bar and a horizontal LED lighting bar apt to be operated sequentially and automatically.

11. System for controlling the quality of products in output from a cutting machine according to any one of the preceding claims, wherein the processing unit (D), by means of said quality values (Qₒᵤₜ) scanned, is apt to assess the presence of dirt, wrinkles or other production defects on the rolls in output and to start a maintenance phase comprising, among the various operations, stopping the cutting machine for cleaning of the disc, regulating the working pressures and other manual activities.

12. System for controlling the quality of products in output from a cutting machine according to any one of the preceding claims, wherein said processing unit (D) also functions as a unit of storage of the data scanned and of the operations carried out and is apt to implement automatic learning methods in order to minimise the consumption of the cutting disc (11) and maximise the efficiency of the sharpening process.

## Patentansprüche

1. System zur Steuerung der Qualität von Produkten, die von einer Schneidemaschine, insbesondere einer Schneidemaschine, die zum Schneiden von Wickeln aus bahnförmigem Material, insbesondere Papier, verwendet wird und wenigstens eine Schneidscheibe (11) und ein Schleifrad (14) aufweist, ausgegeben werden, wobei das Steuersystem eine PLC-Steuerung (20), die dazu bestimmt ist, den Schneide- und Schärfungsprozess zu steuern, und ein Prüfsystem (S) mit einem Sichtsystem, das aus einer oder mehreren Kameras besteht, die dazu fähig sind, zu einem gegebenen Zeitpunkt (t(k)) einen Satz von Qualitätswerten (Qₒᵤₜ) abzutasten, der aus einer oder mehreren photographischen Scans einer von der Schneidemaschine ausgegebenen Rolle (15) besteht, aufweist,
**dadurch gekennzeichnet, dass**
das Sichtsystem aus vier bis acht Kameras besteht, die in einem Abstand zwischen 100 und 1000 mm von der Mitte der Rolle (15) angeordnet sind, und
eine Verarbeitungseinheit (D) den Satz von Qualitätswerten (Qₒᵤₜ) der ausgegebenen Rolle (15) erhält und diese mit Referenzqualitätswerten (Qₛₑₜₚₒᵢₙₜ), die aus Aufnahmen oder Darstellungen von Rollen mit einer idealen Schneidequalität bestehen, vergleicht, um zu überprüfen, ob die Rolle (15) ausreichende Qualitätsgrade aufweist, und einen Befehl an die PLC-Steuerung (20) sendet, der auf die Vornahme einer Handlung abzielt, die aus einem auf dem Ergebnis des Vergleichs zwischen dem Satz von Qualitätswerten (Qₒᵤₜ) des Ausgangs und den Referenzqualitätswerten (Qₛₑₜₚₒᵢₙₜ) und der Handlung, die zu einem vorherigen Zeitpunkt (t(k-1)) vorgenommen wurde, beruhenden Erhöhen oder Verringern eines der folgenden Parameter,
- der Schleifzeit (Δtₛₕₐᵣₚ),
- der Schleifhäufigkeit (fₛₕₐᵣₚ),
- der Differenzgeschwindigkeit (Δv) zwischen dem Schleifrad (14) und der Scheibe (11),
besteht.

2. System zur Steuerung der Qualität von Produkten, die von einer Schneidemaschine ausgegeben werden, nach Anspruch 1, ferner aufweisend ein automatisiertes mechanisches System mit einem Greifer oder einem Lastzellensystem, das in der Lage ist, eine Kompression von 2 bis 5 mm auszuüben, um die Kompaktheit und die Dichte der ausgegebenen Rolle (15) festzustellen.

3. System zur Steuerung der Qualität von Produkten, die von einer Schneidemaschine ausgegeben werden, nach Anspruch 1 oder 2, ferner aufweisend einen Roboterarm, der in der Lage ist, auf jegliche Mängel oder Verformungen oder Verzerrungen der ausgegebenen Rolle (15), das heißt, ob die Schnittflächen in Bezug auf die Längsachse der Rolle lotrecht oder geneigt sind, zu prüfen.

4. System zur Steuerung der Qualität von Produkten, die von einer Schneidemaschine ausgegeben werden, nach Anspruch 1, wobei die Verarbeitungseinheit (D) ein System zur Detektion und zur Analyse der Geometrien der Rolle (15), insbesondere ein Abtastsystem, das in der Lage ist, wenigstens die Geometrien der Innenkante und der Außenkante der Rolle zu detektieren, aufweist.

5. System zur Steuerung der Qualität von Produkten, die von einer Schneidemaschine ausgegeben werden, nach einem der vorhergehenden Ansprüche, ferner aufweisend ein System zum Anwenden eines Filters auf die photographischen Scans (Qₒᵤₜ), das in der Lage ist, die Schattenbereiche, die einem nicht angrenzenden Schnitt an der ausgegebenen Rolle (15) entsprechen, hervorzuheben.

6. System zur Steuerung der Qualität von Produkten, die von einer Schneidemaschine ausgegeben werden, nach einem der vorhergehenden Ansprüche, wobei die Verarbeitungseinheit (D) nur dann, wenn der Satz von abgetasteten Qualitätswerten (Qₒᵤₜ) unter einem Startreferenzqualitätsschwellenwert (Qₛₜₐᵣₜ) liegt, eine Phase zur Regulierung der Parameter des Schleifprozesses beginnt, die aus dem Erhöhen oder Verringern eines der folgenden Parameter (Schleifzeit (Δtₛₕₐᵣₚ), Schleifhäufigkeit (fₛₕₐᵣₚ), Differenzgeschwindigkeit (Δv)) besteht, wobei die Parameterregulierungsphase endet, wenn der Satz von Qualitätswerten (Qₒᵤₜ) einen Stoppreferenzqualitätswert (Qₛₜₒₚ) erfüllt.

7. System zur Steuerung der Qualität von Produkten, die von einer Schneidemaschine ausgegeben werden, nach Anspruch 6, wobei die Parameterregulierungsphase mit einer Erhöhung der Differenzgeschwindigkeit (Δv) zwischen dem Schleifrad (14) und der Scheibe (11) beginnt.

8. System zur Steuerung der Qualität von Produkten, die von einer Schneidemaschine ausgegeben werden, nach einem der vorhergehenden Ansprüche, wobei die Parameter dann, wenn der Vergleich zwischen dem Satz von Qualitätswerten (Qₒᵤₜ) und dem Referenzqualitätswert (Qₛₑₜₚₒᵢₙₜ) zu fortlaufenden Zeitpunkten ein positives Ergebnis erbringt, der Reihe nach und zyklisch in der folgenden Reihenfolge, Schleifzeit (Δtₛₕₐᵣₚ) - Schleifhäufigkeit (fₛₕₐᵣₚ) - Differenzgeschwindigkeit (Δv), verringert werden.

9. System zur Steuerung der Qualität von Produkten, die von einer Schneidemaschine ausgegeben werden, nach einem der vorhergehenden Ansprüche, wobei die Parameter dann, wenn der Vergleich zwischen dem Satz von Qualitätswerten (Qₒᵤₜ) und dem Referenzqualitätswert (Qₛₑₜₚₒᵢₙₜ) zu aufeinanderfolgenden Zeitpunkten ein negatives Ergebnis erbringt, der Reihe nach und zyklisch in der folgenden Reihenfolge, Differenzgeschwindigkeit (Δv) - Schleifhäufigkeit (fₛₕₐᵣₚ) - Schleifzeit (Δtₛₕₐᵣₚ), erhöht werden.

10. System zur Steuerung der Qualität von Produkten, die von einer Schneidemaschine ausgegeben werden, nach einem der vorhergehenden Ansprüche, wobei jede der einen oder mehreren Kameras mit einem Beleuchtungssystem verbunden ist, das aus einem senkrechten LED-Leuchtbalken und einen waagerechten LED-Leuchtbalken besteht, die dazu fähig sind, der Reihe nach und automatisch betrieben zu werden.

11. System zur Steuerung der Qualität von Produkten, die von einer Schneidemaschine ausgegeben werden, nach einem der vorhergehenden Ansprüche, wobei die Verarbeitungseinheit (D) durch die abgetasteten Qualitätswerte (Qₒᵤₜ) dazu fähig ist, das Vorhandensein von Schmutz, Falten oder anderen Herstellungsmängeln an den ausgegebenen Rollen zu beurteilen und eine Wartungsphase zu beginnen, die ein Anhalten der Schneidemaschine zum Reinigen der Scheibe, ein Regulieren der Arbeitsdrücke und andere manuelle Handlungen zwischen den verschiedenen Tätigkeiten umfasst.

12. System zur Steuerung der Qualität von Produkten, die von einer Schneidemaschine ausgegeben werden, nach einem der vorhergehenden Ansprüche, wobei die Verarbeitungseinheit (D) auch als Einheit zur Speicherung der abgetasteten Daten und der ausgeführten Tätigkeiten dient und dazu fähig ist, automatische Lernverfahren umzusetzen, um den Verbrauch der Schneidscheibe (11) zu minimieren und die Leistungsfähigkeit des Schleifprozesses zu maximieren.

## Revendications

1. Système de contrôle de la qualité de produits dans une sortie de machine de coupe, en particulier une machine de coupe utilisée pour couper des rondins de matériau en feuilles, en particulier de papier, ayant au moins un disque de coupe (11) et une roue à aiguiser (14), ledit système de commande comprenant une commande à automate programmable (20) conçue pour commander le processus de coupe et d'aiguisage, et un système d'inspection (S) comprenant un système de vision consistant en une ou plusieurs caméra(s) apte(s) à scanner à un instant (t(k)) donné un jeu de valeurs de qualité (Qₒᵤₜ) consistant en un ou plusieurs scans photographiques d'un rouleau (15) en sortie de la machine de coupe,
**caractérisé en ce que**
ledit système de vision est constitué de 4 à 8 caméras agencées à une distance d'entre 100 et 1000 mm du centre du rouleau (15), et
une unité de traitement (D) reçoit ledit jeu de valeurs de qualité (Qₒᵤₜ) du rouleau (15) en sortie et les compare à des valeurs de qualité de référence (Qₛₑₜₚₒᵢₙₜ) consistant en des photos ou des rendus de rouleaux avec une qualité de coupe idéale pour vérifier si le rouleau (15) a des niveaux de qualité suffisants et envoie une commande à la commande à automate programmable (20) destinée à exécuter une action consistant à augmenter ou baisser un des paramètres suivants :
- temps d'aiguisage (Δtₛₕₐᵣₚ)
- fréquence d'aiguisage (fₛₕₐᵣₚ)
- vitesse différentielle (Δv) entre ladite roue d'aiguisage (14) et ledit disque (11) en se basant sur le résultat de la comparaison entre ledit jeu de valeurs de qualité en sortie (Qₒᵤₜ) et les valeurs de qualité de référence (Qₛₑₜₚₒᵢₙₜ) et de l'action exécutée à l'instant précédent (t(k-1)).

2. Système de contrôle de la qualité de produits dans une sortie de machine de coupe selon la revendication 1, comprenant en outre un système mécanique automatisé ayant un grappin ou un système à cellules de chargement capable d'appliquer une compression de 2 à 5 mm pour garantir la compacité et la densité du rouleau en sortie (15).

3. Système de contrôle de la qualité de produits dans une sortie de machine de coupe selon la revendication 1 ou 2, comprenant en outre un bras robotique capable de vérifier n'importe quel défaut de distorsion ou de décalage du rouleau en sortie (15), c'est-à-dire si les surfaces de coupe sont perpendiculaires ou inclinées par rapport à l'axe longitudinal du rouleau.

4. Système de contrôle de la qualité de produits dans une sortie de machine de coupe selon la revendication 1, dans lequel l'unité de traitement (D) comprend un système de détection et d'analyse des géométries du rouleau (15), en particulier un système de scanning capable de détecter au moins les géométries du bord intérieur et du bord extérieur du rouleau.

5. Système de contrôle de la qualité de produits dans une sortie de machine de coupe selon l'une quelconque des revendications précédentes, comprenant en outre un système pour appliquer un filtre aux scans photographiques (Qₒᵤₜ) capable de mettre en évidence les zones d'ombre correspondant à une coupe non-adjacente sur le rouleau en sortie (15).

6. Système de contrôle de la qualité de produits dans une sortie de machine de coupe selon l'une quelconque des revendications précédentes, dans lequel ladite unité de traitement (D) lance une phase de régulation des paramètres du processus d'aiguisage comprenant une série d'actions consistant à augmenter ou baisser un des paramètres suivants (temps d'aiguisage (Δtₛₕₐᵣₚ), fréquence d'aiguisage (fₛₕₐᵣₚ), vitesse différentielle (Δv) uniquement lorsque le jeu de valeurs de qualité (Qₒᵤₜ) scanné est en-dessous d'un seuil de qualité de référence de départ (Qₛₜₐᵣₜ), la phase de régulation de paramètres se terminant lorsque le jeu de valeurs de qualité (Qₒᵤₜ) rencontre une valeur de qualité de référence d'arrêt (Qₛₜₒₚ).

7. Système de contrôle de la qualité de produits dans une sortie de machine de coupe selon la revendication 6, dans lequel ladite phase de régulation de paramètres commence avec un incrément dans la vitesse différentielle (Δv) entre la roue d'aiguisage (14) et le disque (11).

8. Système de contrôle de la qualité de produits dans une sortie de machine de coupe selon l'une quelconque des revendications précédentes, dans lequel, si dans des instants consécutifs, la comparaison entre ledit jeu de valeurs de qualité (Qₒᵤₜ) et ladite valeur de qualité de référence (Qₛₑₜₚₒᵢₙₜ) a un résultat positif, lesdits paramètres sont baissés séquentiellement et cycliquement, dans l'ordre suivant : temps d'aiguisage (Δtₛₕₐᵣₚ) - fréquence d'aiguisage (fₛₕₐᵣₚ) - vitesse différentielle (Δv).

9. Système de contrôle de la qualité de produits dans une sortie de machine de coupe selon l'une quelconque des revendications précédentes, dans lequel, si dans des instants consécutifs, la comparaison entre ledit jeu de valeurs de qualité (Qₒᵤₜ) et ladite valeur de qualité de référence (Qₛₑₜₚₒᵢₙₜ) a un résultat négatif, lesdits paramètres sont augmentés séquentiellement et cycliquement, dans l'ordre suivant : - vitesse différentielle (Δv) - fréquence d'aiguisage (fₛₕₐᵣₚ) - temps d'aiguisage (Δtₛₕₐᵣₚ).

10. Système de contrôle de la qualité de produits dans une sortie de machine de coupe selon l'une quelconque des revendications précédentes, dans lequel chacune desdites une ou plusieurs caméras est associée à un système d'éclairage consistant en une barre d'éclairage à LED verticale et une barre d'éclairage à LED horizontale aptes à être actionnées de manière séquentielle et automatique.

11. Système de contrôle de la qualité de produits dans une sortie de machine de coupe selon l'une quelconque des revendications précédentes, dans lequel l'unité de traitement (D), au moyen desdites valeurs de qualité (Qₒᵤₜ) scannées, est apte à évaluer la présence de saletés, plis ou autres défauts de production sur les rouleaux en sortie et à commencer une phase de maintenance comprenant, parmi les différentes opérations, à arrêter la machine de coupe pour le nettoyage du disque, réguler les pressions de travail et autres activités manuelles.

12. Système de contrôle de la qualité de produits dans une sortie de machine de coupe selon l'une quelconque des revendications précédentes, dans lequel ladite unité de traitement (D) fonctionne également en tant qu'une unité de stockage des données scannées et des opérations effectuées et est apte à implémenter des procédés d'apprentissage automatique afin de minimiser la consommation du disque de coupe (11) et de maximiser l'efficacité du processus d'aiguisage.
